# EUROPÄISCHE PATENTSCHRIFT

(11) **EP 1 878 958 B1**
(45) Veröffentlichungstag und Bekanntmachung des Hinweises auf die Patenterteilung: **26.11.2008**
(21) Anmeldenummer: 06014777.4
(22) Anmeldetag: 15.07.2006
(51) Int. Cl.: F16K 27/00

(54) **Ventilanordnung**
Valve device
Soupape

(43) Veröffentlichungstag der Anmeldung: 16.01.2008
(73) Patentinhaber: FESTO AG & Co. KG, 73734 Esslingen (DE)
(72) Erfinder: Bogdanowicz, Grzegorz, 73760 Ostfildern (DE); Räpke, Falk, 73760 Ostfildern (DE)
(74) Vertreter: Abel, Martin

(56) Entgegenhaltungen:
- WO-A-20/05033565
- DE-A1- 1 958 200
- GB-A- 2 052 017
- US-A1- 2002 129 856

## Beschreibung

Die Erfindung betrifft eine Ventilanordnung, mit einer eine Plattenhauptachse aufweisenden Anschlussplatte, die mit einer Mehrzahl von in Richtung der Plattenhauptachse aufgereihten Mehrwegeventilen bestückt ist, die je einen an einer sich längs der Plattenhauptachse erstreckenden Bestückungsfläche der Anschlussplatte angeordneten, elektrisch betätigbaren Antriebskopf und einen sich daran anschließend längs einer zur Plattenhauptachse rechtwinkeligen Ventilhauptachse in der Anschlussplatte erstreckenden Steuerteil enthalten.

Eine aus der DE 8530287 U1 bekannte Ventilanordnung dieser Art enthält mehrere längs einer mit internen Kanälen versehenen Anschlussplatte aufgereihte Mehrwegeventile, deren elektrisch betätigbarer Antriebskopf an einer Bestückungsfläche der Anschlussplatte fixiert ist. Mit einem sich daran anschließenden, ein Ventilglied enthaltenden Steuerteil tauchen die Mehrwegeventile offensichtlich jeweils ein Stück weit in die Anschlussplatte hinein. Nachteilig bei dieser Anordnung ist die mit zunehmender Ventilanzahl in Richtung der Plattenhauptachse zunehmende Baulänge.

Man könnte daher in Erwägung ziehen, die Mehrwegeventile auf mehrere nebeneinander angeordnete Ventilreihen aufzuteilen. Hierbei können jedoch gegenseitige Behinderungen durch die Antriebsköpfe auftreten, zumal solche Antriebsköpfe bei einer Ausgestaltung als Vorsteuerstufen meist ziemlich voluminös sind.

Dokument US 2002/0129856 offenbart ein Ventil, wie in Oberbegriff des Anspruchs 1 beschrieben ist.

Eine wesentliche Aufgabe der vorliegenden Erfindung besteht in der Realisierung einer platzsparenden Anordnung einer Mehrfachanordnung von Mehrwegeventilen.

Zur Lösung dieser Aufgabe ist in Verbindung mit einer Ventilanordnung der eingangs genannten Art vorgesehen,
dass die Anschlussplatte zwei einander entgegengesetzt orientierte Bestückungsflächen aufweist, deren eine mit den Antriebsköpfen der einen Ventilreihe und deren andere mit den Antriebsköpfen der anderen Ventilreihe bestückt ist, wobei sich die Steuerteile der beiden Ventilreihen im Innern der Anschlussplatte in ihrer axialen Richtung überlappen,
und dass die Mehrwegeventile der beiden Ventilreihen in Richtung der Plattenhauptachse derart versetzt zueinander angeordnet sind, dass eine abwechselnde Aufeinanderfolge der Ventilhauptachsen der beiden Ventilreihen vorliegt.

Durch die Aufteilung der vorhandenen Mehrwegeventile in zwei zueinander parallele Ventilreihen ist eine beträchtliche Verkürzung der Baulänge der Ventilanordnung in Richtung der Plattenhauptachse möglich. Gleichzeitig wird durch den parallelen Versatz der beiden Ventilreihenebenen in Verbindung mit den sich axial überlappenden Steuerteilen erreicht, dass die Vergrößerung der Baubreite in Richtung der Ventilhauptachsen sehr moderat ausfällt. Der in Richtung der Plattenhauptachse auftretende Versatz zwischen den Mehrwegeventilen der beiden Ventilreihen begünstigt geringe Abmessungen rechtwinkelig zu den Ventilreihenebenen und ermöglicht einen optimalen Verlauf der in der Anschlussplatte ausgebildeten Fluidkanäle.

Vorteilhafte Weiterbildungen der Erfindung gehen aus den Unteransprüchen hervor.

Die Anschlussplatte ist zumindest in dem mit den Mehrwegeventilen ausgestatteten Längenabschnitt vorzugsweise einstückig ausgebildet. Verglichen mit einem grundsätzlich ebenfalls möglichen modularen Aufbau lassen sich die Herstellkosten hierdurch in der Regel auf einem besonders niedrigen Niveau halten.

Das erfindungsgemäße Konzept lässt sich sowohl mit elektrisch direkt angesteuerten als auch mit elektrisch indirekt angesteuerten Mehrwegeventilen realisieren. Gerade auch die letztgenannte Ventilgattung, bei der es sich um eine vorgesteuerte Ventilart mit einem entsprechend voluminösen Antriebskopf handelt, kann aufgrund der an unterschiedlichen Bestückungsflächen sitzenden Antriebsköpfe zu einer kompakten Ventilbaugruppe zusammengefasst werden.

Die elektrofluidischen Vorsteuerstufen der vorgesteuerten Mehrwegeventile enthalten insbesondere jeweils ein oder zwei Magnetventile oder auf einem anderen elektrischen Antriebsprinzip basierende Vorsteuerventile.

Eine besonders eng verschachtelte Anordnung von Mehrwegeventilen wird begünstigt, wenn die Steuerteile im Wesentlichen zylindrisch gestaltet sind.

In einer bevorzugten Gestaltung enthalten die Steuerteile jeweils eine in der Anschlussplatte ausgebildete, sich längs der Ventilhauptachse erstreckende längliche Ausnehmung, in der sich ein in seiner Längsrichtung bewegliches Ventilglied erstreckt, das durch den zugeordneten Antriebskopf umschaltbar und wunschgemäß positionierbar ist. Bei einer solchen Bauform kann die Anschlussplatte unmittelbar selbst mit ihren die Ausnehmungen begrenzenden Wandabschnitten als Ventilgehäuse für die einzelnen Steuerteile fungieren.

Die Mehrwegeventile lassen sich in verschiedensten Funktionalitäten realisieren. Beispielsweise kann es sich um 3/2-, um 4/2- oder um 5/2-Wegeventile handeln. Ungeachtet ihres Typs geht von den Steuerabschnitten der Mehrwegeventile jeweils mindestens ein die Anschlussplatte durchziehender Arbeitskanal aus, der zu einer Verbraucheranschlussfläche der Anschlussplatte ausmündet, wo sich der jeweils anzusteuernde Verbraucher mittels Fluidleitungen anschließen lässt. Die Verbraucheranschlussfläche erstreckt sich vorzugsweise zwischen den beiden Bestückungsflächen, wobei sie quer und insbesondere rechtwinkelig zu diesen Bestückungsflächen orientiert sein kann.

Denkbar wäre die Realisierung mehrerer Verbraucheranschlussflächen, insbesondere zwei einander entgegengesetzt orientierte Verbraucheranschlussflächen. Dies gilt insbesondere für eine Anschlussplatte mit rechteckigem Querschnitt. Allerdings ist es vorteilhaft, wenn wenigstens eine sich längs der Plattenhauptachse erstreckende Außenfläche der Anschlussplatte nicht für fluidische Anschlussmaßnahmen genutzt wird, sodass sie beispielsweise als Montagefläche verwendbar ist, um die Ventilanordnung an einer geeigneten Haltestruktur zu fixieren. Auch aus Gründen einer vereinfachten Handhabung bei der Durchführung der Verbraucher-Anschlussmaßnahmen ist es von Vorteil, wenn an der Anschlussplatte nur eine einzige Verbraucheranschlussfläche vorhanden ist, zu der sämtliche Arbeitskanäle ausmünden.

Vor allem bei einer derartigen Bauart ist es vorteilhaft, wenn die Steuerteile zumindest einer und zweckmäßigerweise beider Ventilreihen die Anschlussplatte jeweils nicht komplett quer durchsetzen, sondern mit Abstand zur Bestückungsfläche der jeweils anderen Ventilreihe im Innern der Anschlussplatte enden. Hier kann dann der zwischen den Stirnseiten der einen Ventilreihe und der dieser benachbarten, der anderen Ventilreihe zugeordneten Bestückungsfläche verbleibende Abschnitt der Anschlussplatte genutzt werden, um von den Steuerteilen der anderen Ventilreihe ausgehende Arbeitskanäle auf ihrem Weg zu einer Verbraucheranschlussfläche vorbeizuführen, ohne Einschränkungen im Kanalquerschnitt hinnehmen zu müssen.

Es besteht in diesem Zusammenhang auch die Möglichkeit, einen zu den Plattenhauptachsen parallelen Kanalabschnitt dieser Arbeitskanäle derart in der Anschlussplatte auszubilden, dass er in einem Anschlussplattenabschnitt verläuft, der sich zwischen dem Steuerteil der jeweils einen Ventilreihe und den beiden diesem Steuerteil benachbarten Steuerteilen der anderen Ventilreihe befindet.

Die Mehrwegeventile jeder Ventilreihe sind zweckmäßigerweise gemeinsam zum einen an einen Speisekanal und zum anderen an einen diesbezüglich separaten Abführkanal angeschlossen. Diese Kanäle durchziehen die Anschlussplatte in Richtung der Plattenhauptachse und ermöglichen eine zentrale Druckversorgung und Druckentlastung sämtlicher in der Ventilanordnung zusammengefassten Mehrwegeventile. Um die beiden Ventilreihen ohne gegenseitige Beeinflussung betreiben zu können, eventuell auch mit unterschiedlichen Betriebsdrücken, kann es empfehlenswert sein, jede Ventilreihe an einen eigenen Speisekanal und auch an einen eigenen Abführkanal anzuschließen.

Für die Verteilung der Mehrwegeventile in Richtung der Plattenhauptachse empfiehlt sich die Einhaltung eines gleichmäßigen Abstandes, insbesondere derart, dass die Ventilhauptachsen der jeweils einen Ventilreihe mittig zwischen den Plattenhauptachsen zweier aufeinanderfolgender Mehrwegeventile der jeweils anderen Ventilreihe platziert sind, allerdings selbstverständlich mit einem aus dem Abstand der beiden Ventilreihenebenen resultierenden Querversatz.

Obgleich es in der Regel nicht notwendig ist, die beiden Ventilreihen so anzuordnen, dass sich ihre Steuerteile rechtwinkelig zu den Ventilreihenebenen überlappen, wäre eine derartige Anordnung prinzipiell ebenfalls denkbar.

Eine optimale Raumausnutzung verspricht eine Ausgestaltung, bei der die Antriebsköpfe so an den Bestückungsflächen installiert sind, dass ihre in Richtung der Ventilhauptachse gemessenen Abmessungen geringer sind als die Abmessungen senkrecht zu den Ventilreihenebenen. Auf diese Weise kann der für die Parallelanordnung der beiden Ventilreihenebenen erforderliche Bauraum optimal für die Unterbringung auch großvolumiger Antriebsköpfe genutzt werden.

Die Antriebsköpfe können insbesondere im Wesentlichen L-förmig gestaltet sein, wobei sie mit der Stirnfläche des einen L-Schenkels an die Bestückungsfläche angebaut sind und sich ihr anderer L-Schenkel rechtwinkelig zu den Ventilreihenebenen erstreckt, mit einander entgegengesetzter Erstrekkungsrichtung bei den Antriebsköpfen der beiden Ventilreihen.

Nachfolgend wird die Erfindung anhand der beiliegenden Zeichnung näher erläutert. In dieser zeigen:
- Figur 1: eine bevorzugte erste Bauform der erfindungsgemäßen Ventilanordnung in einer Schrägansicht auf die Oberseite,
- Figur 2: die Ventilanordnung aus Figur 1 in einer Schrägansicht auf die Unterseite,
- Figur 3: einen Längsschnitt durch die Ventilanordnung gemäß Schnittlinie III-III aus Figur 1,
- Figur 4: einen weiteren Längsschnitt durch die Ventilanordnung, hier gemäß Schnittlinie IV-IV aus Figuren 1 und 5, wobei die Ventilglieder der einen Ventilreihe nicht abgebildet sind,
- Figur 5: einen Querschnitt durch die Ventilanordnung gemäß Schnittlinie V-V aus Figuren 1 und 4 und
- Figur 6: einen weiteren Querschnitt durch die Ventilanordnung gemäß Schnittlinie VI-VI aus Figuren 1 und 4, wobei diese Schnittebene zu derjenigen der Figur 5 um den Abstand zweier aufeinanderfolgender Ventilhauptachsen der beiden Ventilreihen versetzt ist.

Die in ihrer Gesamtheit mit Bezugsziffer 1 bezeichnete Ventilanordnung enthält eine bevorzugt insgesamt einstückig ausgebildete Anschlussplatte 2, die eine gewisse Längserstreckung aufweist, wobei ihre Längsachse eine Plattenhauptachse 3 bildet. Bevorzugt ist die Anschlussplatte 2 im Wesentlichen quaderförmig gestaltet und verfügt wie abgebildet über einen rechteckigen Querschnitt. Insgesamt besitzt die Anschlussplatte 2 somit vier rechtwinkelig zueinander verlaufende längsseitige Außenflächen 4a, 4b, 4c, 4d sowie zwei einander entgegengesetzte stirnseitige Außenflächen 5a, 5b. Andere Gestaltungsformen sind jedoch ebenfalls möglich.

Prinzipiell könnte die Anschlussplatte 2 in Richtung ihrer Plattenhauptachse 3 auch segmentiert sein und sich mithin aus mehreren Plattensegmenten zusammensetzen, die durch geeignete Befestigungsmittel zur Bildung der Anschlussplatte zusammengehalten werden. Aus Kostengründen wird jedoch in der Regel die einstückige Bauform vorgezogen werden.

Die Anschlussplatte 2 ist mit einer Mehrzahl von elektrisch betätigbaren Mehrwegeventilen 6 bestückt. Jedes Mehrwegeventil 6 enthält einen für die Betätigung und die Vorgabe der Schaltposition verantwortlichen, mittels elektrischer Signale aktivierbaren Antriebskopf 7 und einen sich in Verlängerung daran anschließenden und in Richtung einer Ventilhauptachse 9 sich erstreckenden Steuerteil 8. Der Antriebskopf 7 dient zur Vorgabe des Schaltzustandes des jeweils zugeordneten Steuerteils 8.

Die Ventilhauptachsen 9 sämtlicher Mehrwegeventile 6 verlaufen rechtwinkelig zur Achsrichtung der Plattenhauptachse 3.

Die Mehrwegeventile 6 sind in zwei zueinander parallelen Ventilreihen, im Folgenden als erste und zweite Ventilreihe 12a, 12b bezeichnet, an der Anschlussplatte 2 angeordnet. Die Ventilreihen 12a, 12b erstrecken sich in Richtung der Plattenhauptachse 3 und enthalten jeweils mehrere in einer Reihe aufeinanderfolgend angeordnete Mehrwegeventile 6.

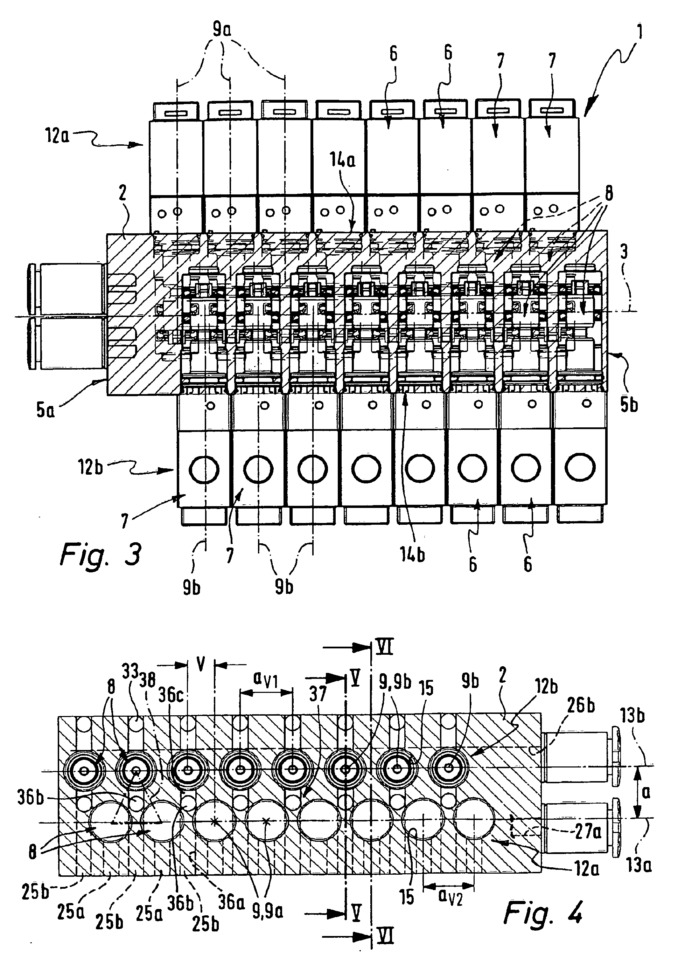

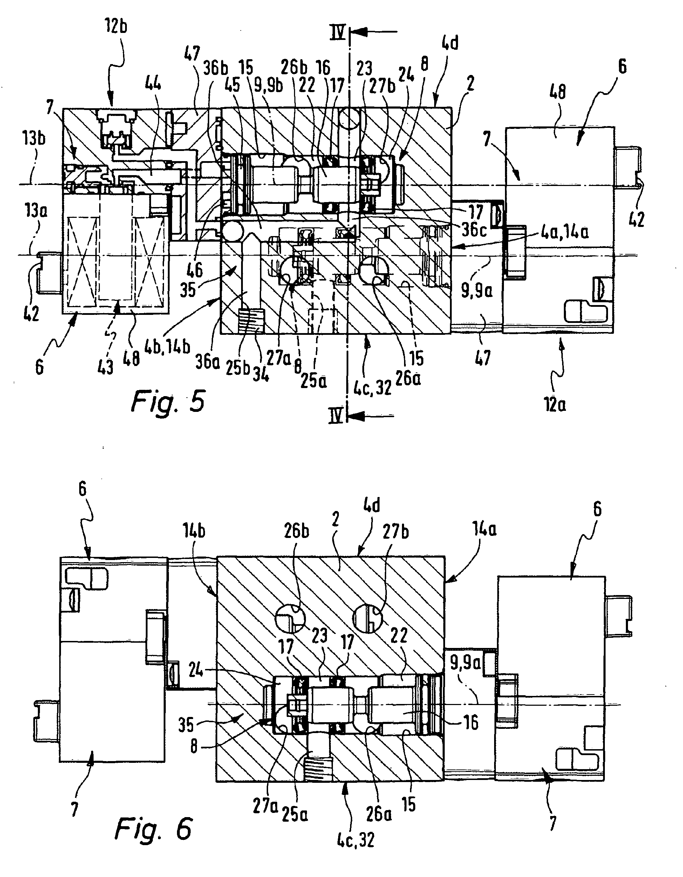

Die zur gleichen Ventilreihe 12a oder 12b gehörenden Mehrwegeventile 6 verfügen untereinander über eine identische Ausrichtung. Die zur ersten Ventilreihe 12a gehörenden ersten Ventilhauptachsen 9a verlaufen dabei in einer gemeinsamen ersten Ventilreihenebene 13a und die zur zweiten Ventilreihe 12b gehörenden zweiten Ventilhauptachsen 9b verlaufen in einer gemeinsamen zweiten Ventilreihenebene 13b. Wie man beispielsweise aus den Figuren 4 und 5 ersehen kann, sind die Mehrwegeventile 6 der beiden Ventilreihen 12a, 12b insgesamt so installiert, dass die beiden Ventilreihenebenen 13a, 13b parallel und mit Abstand zueinander angeordnet sind. Der Abstand zwischen den beiden Ventilreihenebenen 13a, 13b ist in Figur 4 durch "a" kenntlich gemacht.

Für jede der beiden Ventilreihen 12a, 12b ist an der Anschlussplatte 2 eine erste beziehungsweise zweite Bestükkungsfläche 14a, 14b vorgesehen. Diese weisen in einander entgegengesetzte Richtungen und sind exemplarisch von zwei einander entgegengesetzt orientierten längsseitigen Außenflächen 4a, 4b der Anschlussplatte 2 gebildet.

Die Antriebsköpfe 7 der ersten Ventilreihe 12a sind an die erste Bestückungsfläche 14a angebaut. Die Antriebsköpfe 7 der zweiten Ventilreihe 12b sitzen an der entgegengesetzten zweiten Bestückungsfläche 14b. Ausgehend vom zugeordneten Antriebskopf 7 erstreckt sich jedes Steuerteil 8 ins Innere der Anschlussplatte 2 hinein. Aufgrund des Versatzes "a" der beiden Ventilreihenebenen 13a, 13b können sich hierbei die Steuerteile 8 der ersten Ventilreihe 12a mit den Steuerteilen 8 der zweiten Ventilreihe 12b in ihrer axialen Richtung, also in Richtung der Ventilhauptachsen 9, überlappen. Diese axiale Überlappung ist vor allem in Figuren 3 und 5 gut zu erkennen.

Durch diese axiale Überlappung der Steuerteile 8 kann die in Richtung der Ventilhauptachsen 9 gemessene Baubreite der Anschlussplatte 2 sehr gering gehalten werden.

Ein weiteres Merkmal der relativen Platzierung der beiden Ventilreihen 12a, 12b besteht darin, dass die Mehrwegeventile 6 der beiden Ventilreihen 12a, 12b in der Richtung der Plattenhauptachse 3 versetzt zueinander angeordnet sind, sodass sich eine abwechselnde Aufeinanderfolge von Ventilhauptachsen 9 der einen und der anderen Ventilreihe 12a, 12b in Richtung der Plattenhauptachse 3 ergibt. Innerhalb einer jeweiligen Ventilreihe 12a, 12b liegen zwischen den jeweils benachbarten Ventilhauptachsen 9a beziehungsweise 9b zweckmäßigerweise die gleichen Ventilabstände "av1" beziehungsweise "av2" vor, wobei vorzugsweise die Ventilabstände "av1" innerhalb der ersten Ventilreihe 12a den innerhalb der zweiten Ventilreihe 12b vorhandenen Ventilabständen "av2" entsprechen.

Vorzugsweise beträgt der in Richtung der Plattenhauptachse 3 gemessene Versatz "V" zwischen den beiden Ventilreihen 12a, 12b die Hälfte des Ventilabstandes "av1" beziehungsweise "av2". Auf diese Weise ergibt sich in Richtung der Plattenhauptachse 3 ein gleichmäßiger Abstand zwischen den aufeinanderfolgend angeordneten Steuerteilen 8 der ersten und zweiten Ventilreihe 12a, 12b. Mit anderen Worten kann man auch sagen, dass die Steuerteile 8 der beiderseitigen Ventilreihen 12a beziehungsweise 12b in Richtung der Plattenhauptachse 3 "auf Lücke" zueinander angeordnet sind.

Die Steuerteile 8 der Mehrwegeventile 6 umfassen zweckmäßigerweise jeweils eine sich längs der zugeordneten Ventilhauptachse 9 in der Anschlussplatte 2 erstreckende längliche Ausnehmung 15 mit bevorzugt im Wesentlichen zylindrischer Gestaltung. Im Innern jeder Ausnehmung 15 erstreckt sich in Längsrichtung ein axial bewegbares, bevorzugt als Ventilschieber ausgebildetes längliches Ventilglied 16. Letzteres ist von mehreren axial beabstandeten ringförmigen Dichtungen 17 umgeben, die im Innern der Ausnehmung 15 ortsfest fixiert sind und Letztere dadurch in mehrere axial aufeinanderfolgende Ausnehmungsabschnitte 22, 23, 24 unterteilt. Das Ventilglied 16 ist in an sich bekannter Weise so ausgebildet, dass es je nach Schaltstellung in unterschiedlicher Weise mit den ringförmigen Dichtungen 17 kooperiert und dadurch in ausgewählter Weise Verbindungen zwischen benachbarten Ausnehmungsabschnitten herstellt oder freigibt.

Beim Ausführungsbeispiel sind die Steuerteile 8 so ausgebildet, dass sie eine 3/2-Ventilfunktion erfüllen können. Insofern ist vorgesehen, dass der mittlere Ausnehmungsabschnitt 23 mit einem Arbeitskanal 25a beziehungsweise 25b kommuniziert, während von den beiden anderen Ausnehmungsabschnitten 22, 24 der eine mit einem der Fluidzufuhr dienenden Speisekanal 26a beziehungsweise 26b und der andere mit einem der Fluidabfuhr dienenden Abführkanal 27a beziehungsweise 27b verbunden ist.

Die vorgenannten Kanäle verlaufen durchweg im Innern der Anschlussplatte 2 und münden an geeigneter Stelle an den Außenflächen 4, 5 aus.

Die Steuerteile 8 jeder Ventilreihe 12a, 12b stehen gemeinsam mit ein und demselben Speisekanal 26a, 26b und auch mit ein und demselben Abführkanal 27a, 27b in Verbindung. Diese Kanäle durchziehen die Anschlussplatte in Richtung der Plattenhauptachse 3, wobei sie die Ausnehmungen 15 in den entsprechenden Ausnehmungsabschnitten 22, 24 durchqueren. Sie münden jeweils zu beiden stirnseitigen Außenflächen 5a, 5b aus, wobei ihnen an wenigstens einer stirnseitigen Außenfläche 5a Anschlussmittel 28 zugeordnet sind, die eine Verbindung der Speisekanäle 26a, 26b mit einer Druckquelle und eine Verbindung der Abführkanäle 27a, 27b mit einer Drucksenke ermöglichen. Die Druckquelle ist insbesondere eine Druckluftquelle.

Als Drucksenke kommt vor allem die Atmosphäre in Frage. Die Abführkanäle 27a, 27b können über die Anschlussmittel 28 auch mit Schalldämpfern ausgestattet werden oder können direkt mit der Atmosphäre kommunizieren, wobei Anschlüssmittel 28 in diesem Fall nicht zwingend erforderlich sind.

Zweckmäßig ist es auf jeden Fall, wenn die Anschlussmittel 28 für sämtliche Speise- und Abführkanäle 26a, 26b, 27a, 27b an ein und derselben stirnseitigen Außenfläche 5a vorhanden sind. An der entgegengesetzten Stirnseite können die Kanäle durch Verschlusselemente verschlossen sein oder sacklochartig enden.

Prinzipiell wäre es möglich, die beiden Ventilreihen an ein und denselben gemeinsamen Speisekanal und/oder Abführkanal anzuschließen. Eine variablere Betriebsweise ist jedoch möglich, wenn zumindest getrennte Speisekanäle 26a, 26b und vorzugsweise auch getrennte Abführkanäle 27a, 27b vorhanden sind.

Die Arbeitskanäle 25a, 25b sind den einzelnen Steuerteilen 8 individuell zugeordnet. Von jedem Steuerteil 8 geht mindestens ein eigener, individueller Arbeitskanal aus, wobei zur besseren Unterscheidung die Arbeitskanäle der ersten Ventilreihe 12a mit "25a" und die Arbeitskanäle der zweiten Ventilreihe 12b mit "25b" identifiziert sind.

Die Arbeitskanäle 25a, 25b münden mit ihren den Ausnehmungen 15 entgegengesetzten Endabschnitten zu einer außen an der Anschlussplatte 2 angeordneten Verbraucheranschlussfläche 32 aus. Bevorzugt münden die Arbeitskanäle 25a, 25b beider Ventilreihen 12a, 12b gemeinsam an ein und derselben Verbraucheranschlussfläche 32, die vorzugsweise von einer der beiden sich zwischen den zwei Bestückungsflächen 14a, 14b erstrekkenden längsseitigen Außenflächen 4c der Anschlussplatte 2 gebildet ist. Exemplarisch ist dies diejenige längsseitige Außenfläche 4c, die näher bei der ersten Ventilreihenebene 13a als bei der zweiten Ventilreihenebene 13b liegt. Vorzugsweise verläuft die Verbraucheranschlussfläche 32 zu beiden Ventilreihenebenen 13a, 13b parallel.

Die noch verbleibende vierte längsseitige Außenfläche 4d enthält keinerlei Fluidanschlüsse und trägt auch ansonsten keinerlei Komponenten. Sie kann genutzt werden, um die Ventilanordnung 1 an einer nicht näher gezeigten Tragstruktur zu installieren. Soweit an dieser, der Verbraucheranschlussfläche 32 entgegengesetzten längsseitigen Außenfläche 4d Kanäle ausmünden, sind diese durch beispielhaft kugelförmige Verschlusskörper 33 dicht verschlossen und nur aus fertigungstechnischen Gründen, zur Herstellung eines abgewinkelten Verlaufes der Arbeitskanäle 25b der zweiten Ventilreihe 12b, vorhanden. Für die Funktion der Ventilanordnung 1 sind sie irrelevant.

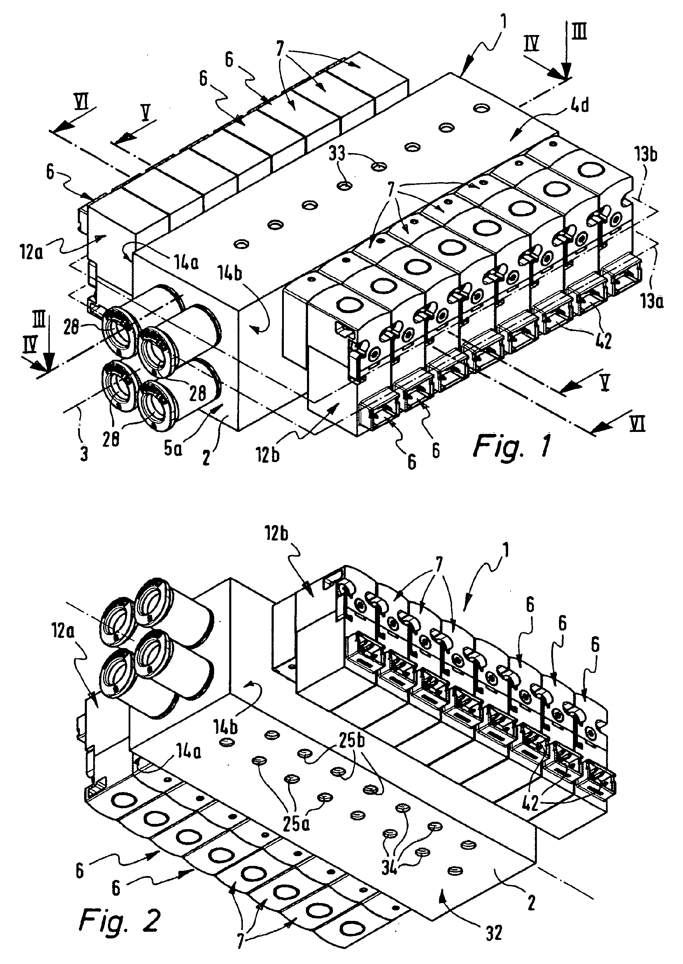

Den Mündungsbereichen der Arbeitskanäle 25a, 25b an der Verbraucheranschlussfläche 32 sind Anschlussmittel 34 zugeordnet, die das Anschließen von Fluidleitungen ermöglichen, welche zu einem zu betätigenden Verbraucher führen, beispielsweise ein oder mehrere, durch Fluidkraft aktivierbare Antriebe. Exemplarisch sind die Anschlussmittel 34 als Innengewinde ausgebildet. Andere Bauformen sind jedoch ebenfalls möglich, beispielsweise Steckanschlussmittel, wie sie in Figur 1 anhand der Anschlussmittel 28 illustriert sind.

Entsprechend der gewählten Schaltstellung des Ventilgliedes 16 sind die Mehrwegeventile 6 jeweils in der Lage, den ihnen zugeordneten Arbeitskanal 25a, 25b wahlweise mit einem Speisekanal 26a, 26b oder einem Abführkanal 27a, 27b zu verbinden, um fluidisches Druckmedium dem angeschlossenen Verbraucher zuzuführen oder von diesem abzuführen und dadurch eine gewünschte Aktion hervorzurufen.

Zu Gunsten einer möglichst geringen Baulänge der Ventilanordnung 1 in Richtung der Plattenhauptachse 3 werden die Mehrwegeventile 6 innerhalb der einzelnen Ventilreihen 12a, 12b möglichst dicht gepackt. Um gleichwohl Beeinträchtigungen bei der Kanalführung der Arbeitskanäle 25a, 25b zu vermeiden, sind die Steuerteile 8 in einer Weise gestaltet, dass ein optimaler Kanalverlauf realisierbar ist.

Genauer gesagt verfügen die Steuerteile 8 über eine Baulänge, die geringer ist als der Abstand zwischen den beiden sich gegenüberliegenden Bestückungsflächen 14a, 14b. Jedes Steuerteil 8 beginnt an der Bestückungsfläche 14a, 14b der zugeordneten Ventilreihe 12a, 12b, wobei es die Anschlussplatte 2 jedoch nicht komplett durchsetzt, sondern innerhalb der Anschlussplatte 2 mit Abstand vor der gegenüberliegenden Bestückungsfläche der anderen Ventilreihe endet.

Somit verbleibt insbesondere zwischen den vom zugeordneten Antriebskopf 7 abgewandten Stirnseiten der Steuerteile 8 der ersten Ventilreihe 12a und der dieser benachbarten Bestükkungsfläche 14b der zweiten Ventilreihe 12b ein von den Steuerteilen 8 der ersten Ventilreihe 12a nicht belegter Plattenabschnitt 35 der Anschlussplatte 2, der genutzt wird, um die zur zweiten Ventilreihe gehörenden Arbeitskanäle 25b auf ihrem Weg zur Verbraucheranschlussfläche 32 stirnseitig vor der ersten Ventilreihe 12a vorbeizuführen.

Die Arbeitskanäle 25b besitzen einen in dem Plattenabschnitt 35 rechtwinkelig zu den Ventilreihenebenen 13a, 13b verlaufenden ersten Kanalabschnitt 36a, der einenends zur Verbraucheranschlussfläche 32 ausmündet und andernends im Bereich zwischen den beiden Ventilreihenebenen 13a, 13b in einen zu den Ventilhauptachsen 9 parallelen zweiten Kanalabschnitt 36b übergeht, der dann letztlich über einen neuerlich zu den Ventilreihenebenen 13a, 13b rechtwinkeligen dritten Kanalabschnitt 36c in die Ausnehmung 15 des zugeordneten Steuerteils 8 der zweiten Ventilreihe 12b einmündet.

Auf diese Weise umgehen die Arbeitskanäle 25b der zweiten Ventilreihe 12b die Steuerteile 8 der ersten Ventilreihe 12a und können problemlos zu der gemeinsamen Verbraucheranschlussfläche 32 geführt werden.

Bei den Arbeitskanälen 25a der ersten Ventilreihe 12a ist eine solche Umgehung nicht notwendig, da sie direkt zur unmittelbar benachbarten gemeinsamen Verbraucheranschlussfläche 32 geführt werden können.

Aus Figur 4 wird deutlich, dass die ersten Kanalabschnitte 36a jeweils in dem Zwischenbereich zwischen zwei benachbarten Steuerteilen 8 der ersten Ventilreihe 12a vor dieser ersten Ventilreihe 12a vorbeilaufen, wobei in Richtung der Plattenhauptachse 3 eine Überlappung mit diesen Steuerteilen 8 möglich ist. Da der erste Kanalabschnitt 36a den Steuerteilen 8 der ersten Ventilreihe 12a vorgelagert ist, scheidet eine Kollision aus.

Durch diese vorstehend geschilderte Anordnung wird außerdem erreicht, dass der zweite Kanalabschnitt 36b in demjenigen Anschlussplattenabschnitt 37 verläuft, der sich zwischen dem mit dem betreffenden Arbeitskanal 25b verbundenen Steuerteil 8 der zweiten Ventilreihe 12b und den beiden diesem Steuerteil 8 benachbarten Steuerteilen 8 der ersten Ventilreihe 12a befindet. Zwei jeweils benachbarte erste Ventilhauptachsen 9a definieren mit der ihnen jeweils benachbarten zweiten Ventilhauptachse 9b die Eckpunkte eines in Figur 4 strichpunktiert angedeuteten gleichschenkeligen oder gleichseitigen Dreieckes 38, in dessen Zentrumsbereich sich der zweite Kanalabschnitt 36b erstreckt.

Die Ausnehmungen 15 sind vorzugsweise nach Art von Sacklöchern in der Anschlussplatte 2 ausgebildet. Der sich stirnseitig an sie anschließende Plattenabschnitt 35 ist mithin ein einstückiger Bestandteil der Anschlussplatte 2. Vorzugsweise sind die Ausnehmungen 15 und somit die gesamten Steuerteile 8 jeweils im Wesentlichen zylindrisch gestaltet.

Die Mehrwegeventile 6 des Ausführungsbeispiels sind elektrisch indirekt betätigbarer Gattung, es handelt sich also um vorgesteuerte Ventile. Hierbei sind die Antriebsköpfe 7 als elektrofluidische Vorsteuerstufen ausgebildet, die über elektrische Schnittstellenmittel 42 individuell elektrisch ansteuerbar sind, um ein fluidisches Betätigungssignal zu erzeugen, das dem zugeordneten Steuerteil 8 zugeführt wird, um die Schaltstellung des Ventilgliedes 16 vorzugeben.

Da solche elektrofluidischen Vorsteuerstufen als solches bekannt sind, erübrigt sich eine detaillierte Beschreibung. Beispielsweise enthält hierbei jeder Antriebskopf 7 mindestens ein Magnetventil 43, das die Fluidbeaufschlagung eines Betätigungskanals 44 steuert, der in einen von einem Betätigungskolben 45 begrenzten Betätigungsabschnitt 46 der zugeordneten Ausnehmung 15 einmündet.

Wird der Betätigungsabschnitt 46 durch entsprechende Aktivierung des Magnetventils 43 mit einem Betätigungsfluid beaufschlagt, verlagert sich das Ventilglied 16 gegen die Rückstellkraft von Federmitteln, die für die Rückstellung verantwortlich sind, wenn das Betätigungsfluid durch Umsteuerung des Magnetventils 43 entfernt wird.

Die Federmittel können mechanischer oder fluidischer Art sein. Beim Ausführungsbeispiel sind sie als Luftfeder konzipiert. Als Luftpolster fungiert die in dem mit dem Speisekanal 26a, 26b verbundenen Ausnehmungsabschnitt 22 enthaltene Druckluft.

Das von dem Magnetventil 43 gesteuerte Betätigungsfluid kann extern zugeführt oder, vorzugsweise, aus einem der Speisekanäle 26a, 26b der Anschlussplatte 2 abgezweigt werden.

Anstelle eines Magnetventils könnte auch eine andere Art eines elektrisch betätigbaren Ventils zum Einsatz kommen, beispielsweise ein piezo-elektrisches oder ein elektrostatisches Ventil. Ferner kann jeder Antriebskopf 7 bei Bedarf auch zwei Vorsteuerventile beinhalten, wenn das Mehrwegeventil 6 so ausgebildet ist, dass ein aktives Umschalten des Ventilgliedes 16 in beiden Bewegungsrichtungen gewünscht ist.

Bei einer nicht vorgesteuerten, elektrisch direkt betätigten Variante der Magnetventile 43 erfolgt eine direkte elektromechanische Aktivierung der Ventilglieder 16. Diese können dabei beispielsweise mit dem beweglichen Anker eines elektromagnetischen Antriebskopfes 7 antriebsmäßig gekoppelt sein oder von diesem unmittelbar selbst gebildet sein.

Insbesondere bei als Vorsteuerstufen ausgebildeten Antriebsköpfen 7 erweist sich die beschriebene Ausgestaltung der Ventilanordnung von Vorteil, weil solche Antriebsköpfe 7 in der Regel über verhältnismäßig große Abmessungen verfügen. Die Aufteilung dieser Antriebsköpfe 7 auf einander entgegengesetzt orientierte Bestückungsflächen 14a, 14b schafft genügend Platz für eine behinderungsfreie Anordnung. Dies gilt nicht nur in der Richtung der Plattenhauptachse 3, sondern auch rechtwinkelig zu den Ventilreihenebenen 13a, 13b. In dieser Höhenrichtung können sich die Antriebsköpfe 7 der beiden Ventilreihen 12a, 12b, wie aus Figuren 5 und 6 gut ersichtlich ist, problemlos überlappen.

Man wird bei der Anordnung und Ausgestaltung der Antriebsköpfe 7 zweckmäßigerweise danach trachten, diejenige Dimensionsrichtung, in der die Antriebsköpfe 7 die größten Abmessungen haben, senkrecht zu den Ventilreihenebenen 13a, 13b zu orientieren, da in dieser Richtung wegen der beabstandeten Ventilreihenebenen 13a, 13b sowieso etwas mehr Platz zur Verfügung steht.

Als besonders zweckmäßig hat sich ein im Wesentlichen L-förmiger Aufbau der Antriebsköpfe 7 erwiesen. Hierbei sind die Antriebsköpfe 7 mit der Stirnfläche ihres einen, ersten L-Schenkels 47 an die zugeordnete Bestückungsfläche 14a, 14b angebaut, während ihr anderer, zweiter L-Schenkel 48 rechtwinkelig zu den Ventilreihenebenen 13a, 13b orientiert ist. Dabei weisen die zweiten L-Schenkel 48 der beiden Ventilreihen 12a, 12b in einander entgegengesetzte Richtungen. Exemplarisch ragt jeder Antriebskopf 7 mit seinem zweiten L-Schenkel 48 in Richtung zur Ventilreihenebene der anderen Ventilreihe. Gleichzeitig ist die Anordnung aber so getroffen, dass die Antriebsköpfe 7 nicht über die beiden quer zu den Bestückungsflächen 14a, 14b verlaufenden längsseitigen Außenflächen 4c, 4d hinausragen.

## Patentansprüche

1. Ventilanordnung, mit einer eine Plattenhauptachse (3) aufweisenden Anschlussplatte (2), die mit einer Mehrzahl von in Richtung der Plattenhauptachse (3) aufgereihten Mehrwegeventilen (6) bestückt ist, die je einen an einer sich längs der Plattenhauptachse (3) erstreckenden Bestückungsfläche (14a, 14b) der Anschlussplatte (2) angeordneten, elektrisch betätigbaren Antriebskopf (7) und einen sich daran anschließend längs einer zur Plattenhauptachse (3) rechtwinkeligen Ventilhauptachse (9) in der Anschlussplatte (2) erstreckenden Steuerteil (8) enthalten, wobei die Mehrwegeventile (6) in zwei zueinander parallele Ventilreihen (12a, 12b) aufgeteilt sind, wobei die zur gleichen Ventilreihe (12a, 12b) gehörenden Ventilhauptachsen (9a, 9b) in einer gemeinsamen Ventilreihenebene (13a, 13b) und die beiden Ventilreihenebenen (13a, 13b) parallel und mit Abstand zueinander angeordnet sind, **dadurch gekennzeichnet, dass** die Anschlussplatte (2) zwei einander entgegengesetzt orientierte Bestückungsflächen (14a, 14b) aufweist, deren eine (14a) mit den Antriebsköpfen (7) der einen Ventilreihe (12a) und deren andere (14b) mit den Antriebsköpfen (7) der anderen Ventilreihe (12b) bestückt ist, wobei sich die Steuerteile (8) der beiden Ventilreihen (12a, 12b) im Innern der Anschlussplatte (2) in ihrer axialen Richtung überlappen, und dass die Mehrwegeventile (6) der beiden Ventilreihen (12a, 12b) in Richtung der Plattenhauptachse (3) derart versetzt zueinander angeordnet sind, dass eine abwechselnde Aufeinanderfolge der Ventilhauptachsen (9a, 9b) der beiden Ventilreihen (12a, 12b) vorliegt.

2. Ventilanordnung nach Anspruch 1, **dadurch gekennzeichnet, dass** die Anschlussplatte (2) zumindest in dem mit den Mehrwegeventilen (6) ausgestatteten Längenabschnitt einstückig ausgebildet ist.

3. Ventilanordnung nach Anspruch 1 öder 2, **dadurch gekennzeichnet, dass** die Antriebsköpfe (7) als elektrofluidische Vorsteuerstufen ausgebildet sind und die Steuerteile (8) jeweils ein unter Vermittlung der zugeordneten Vorsteuerstufe axial umschaltbares Ventilglied (16) enthalten.

4. Ventilanordnung nach Anspruch 3, **dadurch gekennzeichnet, dass** die Antriebsköpfe (7) jeweils mindestens ein insbesondere als Magnetventil (43) ausgebildetes, elektrisch betätigbares Vorsteuerventil enthalten.

5. Ventilanordnung nach einem der Ansprüche 1 bis 4, **dadurch gekennzeichnet, dass** die Steuerteile (8) im Wesentlichen zylindrisch gestaltet sind.

6. Ventilanordnung nach einem der Ansprüche 1 bis 5, **dadurch gekennzeichnet, dass** die Steuerteile (8) zumindest einer Ventilreihe (12a, 12b) jeweils eine in der Anschlussplatte (2) ausgebildete längliche Ausnehmung (15) und ein sich darin erstreckendes, durch den Antriebskopf (7) umschaltbares Ventilglied (16) enthalten.

7. Ventilanordnung nach einem der Ansprüche 1 bis 6, **dadurch gekennzeichnet, dass** von den Steuerteilen (8) jeweils mindestens ein zu einer Verbraucheranschlussfläche (32) der Anschlussplatte (2) ausmündender Arbeitskanal (25a, 25b) ausgeht.

8. Ventilanordnung nach Anspruch 7, **dadurch gekennzeichnet, dass** die Verbraucheranschlussfläche (32) zwischen den beiden Bestückungsflächen (14a, 14b) angeordnet und quer zu dieser orientiert ist.

9. Ventilanordnung nach Anspruch 7 oder 8, **dadurch gekennzeichnet, dass** sämtliche Arbeitskanäle (25a, 25b) zu einer gemeinsamen Verbraucheranschlussfläche (32) ausmünden.

10. Ventilanordnung nach einem der Ansprüche 1 bis 9, **dadurch gekennzeichnet, dass** die Steuerteile (8) wenigstens einer und insbesondere beider Ventilreihen (12a, 12b) mit Abstand zur Bestückungsfläche (14b, 14a) der jeweils anderen Ventilreihe (12b, 12a) im Innern der Anschlussplatte (2) enden.

11. Ventilanordnung nach Anspruch 10 in Verbindung mit einem der Ansprüche 7 bis 9, **dadurch gekennzeichnet, dass** die von den Steuerteilen (8) der einen Ventilreihe (12b) ausgehenden Arbeitskanäle (25b) auf ihrem Weg zur zugeordneten Verbraucheranschlussfläche (32) in dem zwischen den Stirnseiten der Steuerteile (8) der anderen Ventilreihe (12a) und der diesen Steuerteilen (8) mit Abstand vorgelagerten Bestückungsfläche (14b) liegenden Plattenabschnitt (35) der Anschlussplatte (2) stirnseitig vor der anderen Ventilreihe (12a) vorbeigeführt sind.

12. Ventilanordnung nach Anspruch 11, **dadurch gekennzeichnet, dass** die stirnseitig vor den Steuerteilen (8) der anderen Ventilreihe (12a) vorbeigeführten Arbeitskanäle (25b) einen zu den Ventilhauptachsen (9a, 9b) parallelen Kanälabschnitt (36b) enthalten, der in dem Anschlussplattenabschnitt (37) verläuft, der zwischen dem zu dem Arbeitskanal (25b) gehörenden Steuerteil (8) und den beiden diesem Steuerteil (8) benachbarten Steuerteilen (8) der anderen Ventilreihe (12a) angeordnet ist.

13. Ventilanordnung nach einem der Ansprüche 10 bis 12, **dadurch gekennzeichnet, dass** jedes Steuerteil (8) eine in der Anschlussplatte (2) ausgebildete, zur zugeordneten Bestükkungsfläche (14a, 14b) ausmündende sacklöchartige Ausnehmung (15) für ein Ventilglied (16) enthält.

14. Ventilanordnung nach einem der Ansprüche 1 bis 13, **dadurch gekennzeichnet, dass** die Mehrwegeventile (6) jeder Ventilreihe (12a, 12b) gemeinsam mit mindestens einem die Anschlussplatte (2) in Richtung der Plattenhauptachse (3) durchziehenden, an eine Druckquelle anschließbaren Speisekanal (26a, 26b) kommunizieren, wobei zweckmäßigerweise jede Ventilreihe (12a, 12b) an einen eigenen Speisekanal (26a, 26b) angeschlossen ist.

15. Ventilanordnung nach einem der Ansprüche 1 bis 14, **dadurch gekennzeichnet, dass** die Mehrwegeventile (6) jeder Ventilreihe (12a, 12b) gemeinsam mit mindestens einem die Anschlussplatte (2) in Richtung der Plattenhauptachse (3) durchziehenden Abführkanal (27a, 27b) kommunizieren, wobei zweckmäßigerweise jede Ventilreihe (12a, 12b) an einen eigenen Abführkanal (27a, 27b) angeschlossen ist.

16. Ventilanordnung nach einem der Ansprüche 1 bis 15, **dadurch gekennzeichnet, dass** die Anschlußplatte (2) einen rechteckigen Querschnitt aufweist.

17. Ventilanordnung nach einem der Ansprüche 1 bis 16, **dadurch gekennzeichnet, dass** zwischen den Ventilhauptachsen (9a, 9b) der beiden Ventilreihen (12a, 12b) in Richtung der Plattenhauptachse (3) ein gleichmäßiger Abstand vorhanden ist.

18. Ventilanordnung nach einem der Ansprüche 1 bis 17, **dadurch gekennzeichnet, dass** sich die Antriebsköpfe (7) der beiden Ventilreihen (12a, 12b) quer zu den Ventilreihenebenen (13a, 13b) überlappen.

19. Ventilanordnung nach einem der Ansprüche 1 bis 18, **dadurch gekennzeichnet, dass** die Antriebsköpfe (7) im Wesentlichen L-förmig gestaltet sind, wobei sie mit der Stirnfläche des einen L-Schenkels (47) an die Bestückungsfläche (14a, 14b) angesetzt sind und der andere L-Schehkel (48) in Richtung zur Ventilreihenebene (13a, 13b) der jeweils anderen Ventilreihe (12a, 12b) ragt.

20. Ventilanordnung nach einem der Ansprüche 1 bis 19, **dadurch gekennzeichnet, dass** die Antriebsköpfe (7) in Richtung der Ventilhauptachse (9a, 9b) über geringere Abmessungen verfügen als in der zu den Ventilreihenebenen (13a, 13b) senkrechten Richtung.

## Claims

1. Valve assembly with a manifold (2) having a manifold main axis (3) and supporting a plurality of multiway valves (6) arranged in a row in the direction of the manifold main axis (3), each of which comprises an electrically operated drive head (7) located on a mounting surface (14a, 14b) of the manifold (2) which extends along the manifold main axis (3) and an adjoining control part (8) extending along a valve main axis (9) running at right angles to the manifold main axis (3), wherein the multiway valves (6) are divided into two parallel valve banks (12a, 12b), the valve main axes (9a, 9b) associated with the respective valve banks (12a, 12b) lying in a common valve bank plane (13a, 13b) and the two valve bank planes (13a, 13b) being arranged parallel to and at a distance from one another, **characterised in that** the manifold (2) comprises two mounting surfaces (14a, 14b) oriented in opposite directions, one (14a) supporting the drive heads (7) of one valve bank (12a) and the other (14b) supporting the drive heads (7) of the other valve bank (12b), wherein the control parts (8) of the two valve banks (12a, 12b) overlap in the interior of the two valve banks (12a, 12b) in the axial direction, and **in that** the multiway valves (6) of the two valve banks (12a, 12b) are offset relative to one another in the direction of the manifold main axis (3) such that the valve main axes (9a, 9b) of the two valve banks (12a, 12b) are arranged alternately.

2. Valve assembly according to claim 1, **characterised in that** the manifold (2) is designed as a single piece at least in the section fitted with the multiway valves (6).

3. Valve assembly according to claim 1 or 2, **characterised in that** the drive heads (7) are designed as electro-hydraulic pilot stages and each of the control parts (8) contains a valve member (16) axially switchable by way of the assigned pilot stage.

4. Valve assembly according to claim 3, **characterised in that** each of the drive heads (7) comprises at least one electrically operated pilot valve designed in particular as a solenoid valve (43).

5. Valve assembly according to any of claims 1 to 4, **characterised in that** the control parts (8) are substantially cylindrical.

6. Valve assembly according to any of claims 1 to 5, **characterised in that** each of the control parts (8) of at least one valve bank (12a, 12b) comprises at least one oblong recess (15) formed in the manifold (2) and a valve member (16) extending therein and switchable by the drive head (7).

7. Valve assembly according to any of claims 1 to 6, **characterised in that** at least one operating passage (25a, 25b) terminating at a working connection surface (32) of the manifold (2) branches off each of the control parts (8).

8. Valve assembly according to claim 7, **characterised in that** the working connection surface (32) is located between the two mounting surfaces (14a, 14b) and oriented at right angles thereto.

9. Valve assembly according to claim 7 or 8, **characterised in that** all operating channels (25a, 25b) terminate at a common working connection surface (32).

10. Valve assembly according to any of claims 1 to 9, **characterised in that** the control parts (8) of at least one and in particular both of the valve banks (12a, 12b) terminate in the interior of the manifold (2) at a distance from the mounting surface (14a, 14b) of the other valve bank (12a, 12b).

11. Valve assembly according to claim 10 in conjunction with any of claims 7 to 9, **characterised in that** the operating passages (25b) starting from the control parts (8) of one valve bank (12b) are on their way to the associated working connection surface (32) routed in front past the other valve bank (12a) in the section (35) of the manifold (2) lying between the end faces of the control parts (8) of the other valve bank (12a) and the mounting surface (14b) placed at a distance in front of said control parts (8).

12. Valve assembly according to claim 11, **characterised in that** the operating passages (25b) routed in front past the control parts (8) of the other valve bank (12a) comprise a passage section (36b) running parallel to the valve main axes (9a, 9b) and extending in the manifold section (37) located between the control part (8) associated with the operating passage (25b) and the two control parts (8) of the other valve bank (12a), which are adjacent to this control part (8).

13. Valve assembly according to any of claims 10 to 12, **characterised in that** each control part (8) is provided with a blind hole-type recess (15) for the valve member (16), which is formed in the manifold (2) and terminates at the respective mounting surface (14a, 14b).

14. Valve assembly according to any of claims 1 to 13, **characterised in that** the multiway valves (6) of each valve bank (12a, 12b) jointly communicate with at least one feed passage (26a, 26b) running through the manifold (2) in the direction of the manifold main axis (3) and connectable to a pressure source, each valve bank (12a, 12b) being expediently connected to its own feed passage (26a, 26b).

15. Valve assembly according to any of claims 1 to 14, **characterised in that** the multiway valves (6) of each valve bank (12a, 12b) jointly communicate with at least one outlet passage (27a, 27b) running through the manifold (2) in the direction of the manifold main axis (3), each valve bank (12a, 12b) being expediently connected to its own outlet passage (27a, 27b).

16. Valve assembly according to any of claims 1 to 15, **characterised in that** the manifold (2) has a rectangular cross-section.

17. Valve assembly according to any of claims 1 to 16, **characterised in that** the distance between the valve main axes (9a, 9b) of the two valve banks (12a, 12b) is constant in the direction of the manifold main axis (3).

18. Valve assembly according to any of claims 1 to 17, **characterised in that** the drive heads (7) of the two valve banks (12a, 12b) overlap at right angles to the valve bank planes (13a, 13b).

19. Valve assembly according to any of claims 1 to 18, **characterised in that** the drive heads (7) are substantially L-shaped, the end face of one L-leg (47) being fitted to the mounting surface (14a, 14b), while the other L-leg (18) projects towards the valve bank plane (13a, 13b) of the other valve bank (12a, 12b).

20. Valve assembly according to any of claims 1 to 19, **characterised in that** the drive heads (7) have smaller dimensions in the direction of the valve main axis (9a, 9b) than in the direction which is perpendicular to the valve bank planes (13a, 13b).

## Revendications

1. Système de vannes, comportant une plaque de raccordement (2) ayant un axe principal (3) et équipée d'une pluralité de vannes multivoies (6), qui sont alignées en rangées dans la direction de l'axe principal (3) et qui comportent chacune une tête d'actionnement (7), actionnable électriquement et disposée sur une surface de montage (14a, 14b) de la plaque de raccordement (2), laquelle s'étend le long de l'axe principal (3) de la plaque, et un élément de commande (8), adjacent à ladite tête d'actionnement (7) et s'étendant le long d'un axe principal de vanne (9), perpendiculaire à la l'axe principal (3) de la plaque dans la plaque de raccordement (2), les vannes multivoies (6) étant réparties en deux rangées de vannes (12a, 12b) parallèles entre elles, les axes principaux (9a, 9b) des vannes appartenant à la même rangée de vannes (12a, 12b) étant disposés dans un plan (13a, 13b) commun et les deux plans (13a, 13b) des rangées de vannes étant disposés parallèlement et à distance l'un de l'autre, **caractérisé en ce que** la plaque de raccordement (2) comporte deux surfaces de montage (14a, 14b) orientées en sens opposés, dont l'une (14a) est munie des têtes d'actionnement (7) de l'une des rangées de vannes (12a) et l'autre (14b) est munie des têtes d'actionnement (7) de l'autre rangée de vannes (12b), les éléments de commande (8) des deux rangées de vannes (12a, 12b) se chevauchant dans leur direction axiale à l'intérieur de la plaque de raccordement (2), et **en ce que** les vannes multivoies (6) des deux rangées de vannes (12a, 12b) sont décalées les unes par rapport aux autres dans la direction de l'axe principal (3) de la plaque, de telle sorte qu'il se forme une succession alternée des axes principaux (9a, 9b) des vannes des deux rangées de vannes (12a, 12b).

2. Système de vannes selon la revendication 1, **caractérisé en ce que** la plaque de raccordement (2) est réalisée d'un seul tenant au moins dans le tronçon longitudinal équipé des vannes multivoies (6).

3. Système de vannes selon la revendication 1 ou 2, **caractérisé en ce que** les têtes d'actionnement (7) sont réalisées sous forme d'étages pilotes électrofluidiques et les éléments de commande (8) comportent chacun un organe de vanne (16) commutable axialement moyennant le branchement de l'étage pilote associé.

4. Système de vannes selon la revendication 3, **caractérisé en ce que** les têtes d'actionnement (7) contiennent chacune au moins une vanne pilote actionnable électriquement, réalisée en particulier sous la forme d'une vanne magnétique (43).

5. Système de vannes selon l'une des revendications 1 à 4, **caractérisé en ce que** les éléments de commande (8) sont sensiblement cylindriques.

6. Système de vannes selon l'une des revendications 1 à 5, **caractérisé en ce que** les éléments de commande (8) d'au moins une rangée de vannes (12a, 12b) comportent chacun un évidement (15) allongé, réalisé dans la plaque de raccordement (2), et un organe de vanne (16) commutable par la tête d'actionnement (7) et disposé dans ledit évidement.

7. Système de vannes selon l'une des revendications 1 à 6, **caractérisé en ce qu'**à partir de chacun des éléments de commande (8) part au moins un conduit de travail (25a, 25b) débouchant dans une surface de raccordement (32) des consommateurs de la plaque de raccordement (2).

8. Système de vannes selon la revendication 7, **caractérisé en ce que** la surface de raccordement (32) des consommateurs est disposée entre les deux surfaces de montage (14a, 14b) et est orientée transversalement à celles-ci.

9. Système de vannes selon la revendication 7 ou 8, **caractérisé en ce que** tous les conduits de travail (25a, 25b) débouchent dans une surface de raccordement (32) des consommateurs commune.

10. Système de vannes selon l'une des revendications 1 à 9, **caractérisé en ce que** les éléments de commande (8) d'au moins une rangée de vannes et, en particulier, des deux rangées de vannes (12a, 12b) se terminent à distance de la surface de montage (14a, 14b) de respectivement l'autre rangée de vannes (12b, 12a) à l'intérieur de la plaque de raccordement (2).

11. Système de vannes selon la revendication 10 en combinaison avec l'une des revendications 7 à 9, **caractérisé en ce que** les conduits de travail (25b), qui partent des éléments de commande (8) de l'une des rangées de vannes (12b), sont dirigés du côté frontal le long de l'autre rangée de vannes (12a) sur leur trajet vers la surface de raccordement (32) des consommateurs associée dans la partie (35) de la plaque de raccordement (2), située entre les faces frontales des éléments de commande (8) de l'autre rangée de vannes (12a) et la surface de montage (14b) située en amont et à distance desdits éléments de commande (8).

12. Système de vannes selon la revendication 11, **caractérisé en ce que** les conduits de travail (25b), dirigés du côté frontal le long des éléments de commande (8) de l'autre rangée de vannes (12a), comportent un tronçon de conduit (36b) qui est parallèle aux axes principaux (9a, 9b) des vannes et qui s'étend dans la partie de plaque de raccordement (37), qui est disposée entre l'élément de commande (8), appartenant au conduit de travail (25b), et les deux éléments de commande (8) de l'autre rangée de vannes (12a), adjacents à cet élément de commande (8).

13. Système de vannes selon l'une des revendications 10 à 12, **caractérisé en ce que** chaque élément de commande (8) comporte un évidement (15) en forme de trou borgne pour un organe de vanne (16), lequel est réalisé dans la plaque de raccordement (2) et débouche dans la surface de montage (14a, 14b) associée.

14. Système de vannes selon l'une des revendications 1 à 13, **caractérisé en ce que** les vannes multivoies (6) de chaque rangée de vannes (12a, 12b) communiquent conjointement avec au moins un conduit d'alimentation (26a, 26b), passant à travers la plaque de raccordement (2) dans la direction de l'axe principal (3) de la plaque et apte à être raccordé à une source de pression, auquel cas, de manière avantageuse, chaque rangée de vannes (12a, 12b) est raccordée à un conduit d'alimentation (26a, 26b) qui lui est propre.

15. Système de vannes selon l'une des revendications 1 à 14, **caractérisé en ce que** les vannes multivoies (6) de chaque rangée de vannes (12a, 12b) communiquent conjointement avec au moins un conduit d'évacuation (27a, 27b), passant à travers la plaque de raccordement (2) dans la direction de l'axe principal (3) de la plaque, auquel cas, de manière avantageuse, chaque rangée de vannes (12a, 12b) est raccordée à un conduit d'évacuation (27a, 27b) qui lui est propre.

16. Système de vannes selon l'une des revendications 1 à 15, **caractérisé en ce que** la plaque de raccordement (2) possède une section rectangulaire.

17. Système de vannes selon l'une des revendications 1 à 16, **caractérisé en ce qu'**une distance uniforme est prévue entre les axes principaux (9a, 9b) des vannes des deux rangées de vannes (12a, 12b) dans la direction de l'axe principal (3) de la plaque.

18. Système de vannes selon l'une des revendications 1 à 17, **caractérisé en ce que** les têtes d'actionnement (7) des deux rangées de vannes (12a, 12b) se chevauchent transversalement aux plans (13a, 13b) des rangées de vannes.

19. Système de vannes selon l'une des revendications 1 à 18, **caractérisé en ce que** les têtes d'actionnement (7) sont configurées sensiblement en forme de L, la surface frontale de l'une des branches (47) du L étant aboutée à la surface de montage (14a, 14b) et l'autre branche (48) du L s'avançant dans la direction vers le plan (13a, 13b) de respectivement l'autre rangée de vannes (12a, 12b).

20. Système de vannes selon l'une des revendications 1 à 19, **caractérisé en ce que** les têtes d'actionnement (7) ont, dans la direction de l'axe principal (9a, 9b) des vannes, une dimension plus faible que dans la direction perpendiculaire aux plans (13a, 13b) des rangées de vannes.
